(19) Europäisches Patentamt
European Patent Office
Office européen des brevets

(11) **EP 1 939 142 B1**

(12) **EUROPEAN PATENT SPECIFICATION**

(45) Date of publication and mention
of the grant of the patent:
**16.03.2011 Bulletin 2011/11**

(51) Int Cl.:
***C02F 1/42*** *(2006.01)*       ***B01J 41/00*** *(2006.01)*

(21) Application number: **06127116.9**

(22) Date of filing: **22.12.2006**

(54) **Method for nitrate collection and determination of N and/or O isotope ratio**

Verfahren zur Nitratsammlung und Bestimmung des N und/oder O Isotopenverhältnisses

Procédé de collecte de nitrate et détermination du rapport isotopique N et/ou O

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.07.2008 Bulletin 2008/27**

(73) Proprietor: **The European Union,
represented by the European Commission
1049 Brussels (BE)**

(72) Inventors:
• **Cosofret, Sorin Cesar
21020, Taino (IT)**
• **Guillou, Claude
21027, Ispra (IT)**
• **Reniero, Fabiano
21020, Taino (IT)**

(74) Representative: **Office Freylinger
P.O. Box 48
8001 Strassen (LU)**

(56) References cited:
**DD-A1- 250 472       DD-A5- 295 612
JP-A- 4 071 682       US-A- 5 062 957**

• **S.R.SILVA ET AL.: "A new method for collection of nitrate from fresh water and the analysis of nitrogen and oxygen isotope ratios" JOURNAL OF HYDROLOGY, vol. 228, no. 1-2, 21 February 2000 (2000-02-21), pages 22-36, XP002432717**

**Description**

TECHNICAL FIELD

The present invention generally relates to a method of nitrate collection from different kinds of matrixes. This method is particularly suited for nitrate extraction in view of nitrogen and oxygen isotope ratio analyses.

BACKGROUND ART

As is well known, nitrogen and oxygen isotope ratios of nitrate provide a powerful tool to investigate nitrate sources and recycling mechanisms. Determination of the nitrogen and oxygen isotope ratios from nitrates is commonly achieved in three steps:

(a) collection (also called extraction) of nitrate from a sample or chemical modification of nitrate into a volatile nitrogen compound (like ammonium);

(b) conversion of the extracted nitrate or volatile nitrogen compound into nitrogen and carbon monoxide (or carbon dioxide) gas;

(c) determination of the nitrogen (N) and oxygen (O) isotope ratio of the produced gas in step b) using an isotope ratio mass spectrometer (IRMS).

The latter two steps are typically achieved by thermal decomposition of extracted nitrate or extracted volatile nitrogen compound using an elemental analyzer (EA) or total combustion system (TC) and subsequent sweeping of the produced $N_2$ and CO and/or $CO_2$ with a He carrier gas into an isotope ratio mass spectrometer (IRMS) in continuous flow (CF) mode.
Various methods are currently in use for collection and preparation of nitrates for CF IRMS measurements and the principal methods are briefly presented here below.
Some methods, initially developed for quantitative analysis of nitrogen, were adapted for isotope measurements. Hence, according to a first reliable method for nitrogen isotopic measurement in nitrates, nitrates are converted to ammonium by a Kjedhal reaction, followed by a conversion of ammonium to nitrogen gas by different methods. As an alternative to steam distillation, ammonium may be slowly diffused into an acid solution or onto acidified filter paper, and combusted or reacted to form $N_2$ (MacKown et al., 1987; Sigman et al., 1997, Sebilo M et al., 2004). The advantage of this kind of method is represented by the unnecessary step for nitrate purification through this conversion to gas. The disadvantage is greater because it is impossible to measure the oxygen isotopes ratio and so a part of information contained in initial molecules is lost.
Methods based on culture denitrifying bacteria are known, with the same drawback, for measurement of nitrogen isotopes ratio only. Recently Casciotti et al. (2002) describe a new method for measurement of oxygen isotopic composition of nitrate from both seawater and freshwater using denitrifying bacteria to convert the nitrates to $N_2O$ in order to determine N and O isotope ratios. This transformation of nitrate in nitrous oxide implies isotopic fractionation and requires complex correction steps. Considering also the long time required for sample preparation and the necessity of using bacteria cultures, this method does not appear applicable as a routine laboratory practice.
McIlvin M. and al. (2005) proposed a new method for nitrogen and oxygen isotope ratio analyses from freshwater and seawater, through chemical conversion of nitrates into nitrous oxide. The method involves the reduction of nitrate to nitrite using spongy cadmium with further reduction to nitrous oxide using sodium azide. The nitrous oxide obtained is then analyzed in a CF IRMS for N and O isotopic values. Conversion of nitrate to nitrous oxide is a reaction with oxygen isotopic fractionation and with exchange between oxygen isotopes from nitrites (intermediate step of nitrate conversion) and water.
Silva S.R. et al. ("A new method for collection of nitrate from fresh water and the analysis of nitrogen and oxygen isotope ratios", Journal of Hydrology, vol 228 (2000) pages 22-36) proposed a method for collection of nitrate from freshwater using an anion exchange resin, followed by the elution of the nitrate from the anion exchange resin with chlorhydric acid and conversion of free
nitrate into silver nitrate using silver oxide as neutralizing agent. The method is applicable only to freshwater; moreover the high cost of silver oxide and the complicate procedure for O isotope samples preparation limits the widespread application of this method in practice.
In order to measure N and O isotope ratios of nitrates in samples with high contents of dissolved organic compounds (DOC), Chang et al. (1999) modified the method of Silva, and introduced a new step consisting in passing the sample through a cationic exchange column. The role of this cationic exchange column is to protonate the DOC and to avoid the retention on the anion exchange resin. Also Chang uses an AG2X type resin (instead of the AG1X resin used by Silva et al) and a higher quantity of silver oxide. This resin was preferred because of its lower affinity for DOC, but is disadvantageous in that it has lower affinity for nitrates.

Sakata M. (2001) proposes a method for measurement of nitrate and ammonium in water using a sequential distillation step in order to separate nitrate from ammonium. Then ammonium is precipitated as ammoniumtetra-phenylborate, and the remaining nitrate is converted to ammonium with Devarda's alloy. After this conversion, the ammonium obtained is again precipitated following the same procedure.

US 5,062,957 discloses a process for removing nitrates from water to make it drinkable, wherein (a) the nitrate containing water is passed over an anion exchange column; (b) the resin is regenerated by an aqueous solution containing sulphate ions and, after an optional neutralization; the regeneration eluate is treated by heterophilic denitrifying bacteria to eliminate the nitrates.

Other methods of removing nitrates from water are disclosed in DD 295 612 A5 and DD 250 472 A1.

OBJECT OF THE INVENTION

The object of the present invention is to provide an alternative method for nitrate collection that is suited for widespread use. This object is achieved by a method for nitrate collection as claimed in claim 1.

GENERAL DESCRIPTION OF THE INVENTION

A method for nitrate collection in accordance with the present invention comprises the steps of:

a) passing a nitrate-containing liquid sample to be analysed, preferably after a pre-treatment step, over an anion exchange material to retain nitrates thereon;

b) eluting nitrates from said anion exchange material with an eluting agent comprising sulphuric acid, phosphoric acid or a mixture of these acids;

c) neutralising the nitrate containing eluate with a neutralizing agent selected from the group consisting of: lead oxide, calcium oxide, barium oxide, strontium oxide, corresponding hydroxides, or mixtures of two or more of these compounds;

d) measuring the nitrogen and/or oxygen isotope ratio in the nitrate-containing eluate.

The present invention thus proposes a method of nitrate collection using anion exchange material together with a particular selection of eluting agents and neutralizing agents. Upon elution, the eluate contains nitric acid as well as sulphuric acid and/or phosphoric acid used for elution and is neutralized with one or more of the selected neutralizing agents, which have been chosen in order to precipitate the eluting agent while the nitrates remain in solution. These neutralizing agents can be oxides or hydroxides of lead, calcium, barium or strontium.

As a matter of fact, the selected neutralizing agents are insoluble or less soluble in water so that the excess of reagent can be removed by filtration. In addition, the neutralizing agent reacts with sulphate, phosphate (and other possible anions like sulphite or carbonate) ions to form insoluble compounds that can be easily removed by filtration. Hence, upon removal of the precipitates, the solution contains lead nitrate-respectively calcium, barium or strontium nitrate-and water. This solution may then be freeze dried to remove the water and obtain solid nitrate compounds (i.e. $Pb(NO_3)_2$, $Ca(NO_3)_2$, $Ba(NO_3)_2$ or $Sr(NO_3)_2$) in view of isotope ratio measurements.

It will be appreciated that the efficiency, ease of implementation and low cost of the proposed eluting and neutralizing agents make the present method particularly interesting for widespread use.

Lead oxide or hydroxide is particularly preferred as neutralizing agent. Using lead oxide as neutralizing agent, neutralisation step c) implies following reactions:

$$H_2SO_4 + 2HNO_3 + PbO_{(s)} \rightarrow PbSO_{4(s)} + Pb(NO_3)_2 + H_2O$$

$$2H_3PO_4 + 2HNO_3 + 4PbO_{(s)} \rightarrow Pb_3(PO_4)_{2(s)} + Pb(NO_3)_2 + 4H_2O$$

The use of lead oxide as neutralizing agent proves advantageous in many respects. Lead oxide is much cheaper than silver oxide $Ag_2O$, which is conventionally used as neutralizing agent in the art. Lead oxide is insoluble in water so that the excess of reagent can be removed by filtration. Lead sulphate, lead phosphate and other common lead compounds (lead sulphite, lead carbonate,) are insoluble and can be easily removed by filtration. Hence, upon removal of the lead precipitates, the solution contains lead nitrate and water. This solution may then be freeze dried to remove the water and obtain solid lead nitrate $Pb(NO_3)_2$ in view of isotope ratio measurements.

Lead forms several types of oxide like: PbO, $Pb_2O_3$, $PbO_2$, $Pb_3O_4$. Also for the same compound like PbO, there exists more allotropic forms like: red (II) lead oxide and yellow (II) lead oxide. In principle, all forms of lead oxide can be used as neutralizing agent. Yellow (II) lead oxide (PbO) is however preferred for its high reaction kinetics with nitrates and comparatively lower reaction kinetics with sulphate, which, due to the predominance of sulphate, permits dissipation of heat produced by the reaction and does therefore not require external cooling.

Preferably, an excess of neutralizing agent is used in step c).

Further, the filtering of the lead precipitates formed in step c) is preferably carried out after the pH of the eluate has attained a value of at least 3.5, preferably between 4 and 6, which indicates completion of the reaction.

The eluting agent preferably consists of pure sulphuric acid or phosphoric acid, or a mixture of such pure acids. The concentration may be in the range of 1 to 8 M, preferably 3 to 5 M.

As it will be understood by those skilled in the art, before passing the liquid sample to be analysed over the anion exchange material in accordance with step a), it is advantageous to subject the sample to a pre-treatment (or pre-extraction) step in order remove any undesired substances/species from the sample. Such pre-treatment step depends on the origin of the liquid sample.

For freshwater for example, such as ice water, rain water and even for some uncontaminated river water, filtering to remove solid substances that may clog the anion exchange material at step (b) may be sufficient. A pre-treatment of the sample with one of the neutralizing agents and a small quantity of sulphuric acid and/or phosphoric acid is however preferred for a better and quicker processing of the sample so as to remove some anions from the initial sample. Adding for example lead oxide in this step permits removal of excessive quantities of anions, which can interfere in the process of further nitrates column retention. Indeed, the presence of high amounts of anions other than nitrate in the sample leads to incomplete retention of nitrates due to competition between anions or saturation of exchange capacity of the anion exchange material.

Analysis of salt water requires a more complex pre-treatment in order to remove the relatively important salt content (NaCl in case of sea water). A first sub-step of this pre-treatment is evaporation through heating.

Next, the nitrates may be extracted from the residuum by means of a mixture of an organic solvent, optionally mixed with water, or forcing to precipitate the principal contaminant anion by a reaction in an organic solvent. The principle of this extraction is that the quantity of nitrates is small (maximum 50 mg) as compared to the quantity of contaminant salts, so that contaminant salts may be eliminated using appropriate solvent or mixtures of solvents. A variety of inexpensive organic solvents (alcohols, acetone, etc.) may be used in this step. When lead oxide (or another of the neutralizing agents) is present in the solvents mixture, lead chloride precipitates (respectively barium, calcium or strontium precipitates) are formed, which can be removed by filtering (as well as other lead precipitates that may be formed).

The organic solvent containing nitrates may then be evaporated from the filtered sample to convert it to an aqueous solution.

An improved, possibly supplementary, purification of the sample extracted from the evaporation residues with the organic solvent mixture can be obtained by passing the sample over a cationic exchange material, advantageously followed by neutralisation with a small quantity of silver oxide. In case the sample contains high amounts of DOC (Dissolved Organic Compounds), the present method proposes an advantageous pre-treatment comprising adding lead oxide, or another one of the neutralizing agents, and optionally sulphuric acid to the sample. Upon removal of the precipitates by filtering, charcoal is added under agitation and the sample is again filtered. It has been found that pre-treating the sample with lead oxide and sulphuric acid before addition of charcoal permits removing undesirable species and facilitates filtering of the charcoal treated sample. The present method is also applicable to nitrate collection from solid samples. Indeed, nitrates being easily soluble in water, it is convenient to bring them in aqueous solution in order to extract them from solid samples. A wide variety of procedures can be used therefore as a pre-treatment step, depending on the initial solid sample.

As a general procedure, the solid sample may be grounded and hot or cold deionised water my be added under agitation. Optionally the mixture can be boiled, frozen, subjected to microwave digestion, etc., in order to facilitate the diffusion of nitrate into the solvent. The mixture may then be stored in refrigerated zone during a certain time to allow sedimentation of solid particles.

Next, the sample may be centrifuged or filtered through high or medium flow Watman filter paper, and the filtrate may then be treated like water with high contents of DOC.

Extraction of nitrates from soil can be made in KCl solution, as is known for methods concerning nitrate measurements in soils, or directly in warm or cold deionised water, followed by appropriate filtering and water pre-treatment.

Nitrate extraction from plant tissues or from other food products or biological tissues (urine, blood), can be made in water after breaking the walls of cal tissues (urine, blood), can be made in water after breaking the walls of cell tissues through freezing, heating, microwave digesting, etc. After the separation of the liquid part of the sample from solid sediments usually through filtration, the sample preparation may be continued by a treatment similar to that for water samples with DOC, the difference being however that in this case the large quantity of interfering substances may need a greater quantity of neutralizing agent and $H_2SO_4$ for this pre-treatment step.

According to another aspect of the present invention, the present invention proposes the use of solid lead nitrate, barium nitrate, calcium nitrate or strontium nitrate having predetermined nitrogen and/or oxygen isotope ratios as a standard for calibration of isotopic analysis devices.

It may be noted that for both N and O isotope ratio analysis, different standards using pure sodium nitrate or potassium nitrate with different N and O ratio value are conventionally used. Alkaline nitrates are known as hygroscopic salts (sodium nitrate presents even deliquescence in moist air) so the use of lead nitrate as standard eliminate this inconvenient.

Typically lead nitrate with different, known N and O isotopes ratio can be obtained through neutralization of nitric acid with yellow lead oxide.

Similarly, barium nitrate, calcium nitrate or strontium nitrate with different, known N and O isotopes ratio can be obtained through neutralization of nitric acid with the respective barium, calcium, or strontium oxides or hydroxides.

Because lead nitrate, barium nitrate, calcium nitrate or strontium nitrate are stable under ordinary conditions of use and storage, stable at photochemical decomposition and non hygroscopic, they represent a good alternative for standards in IRMS measurements.

DETAILED DESCRIPTION OF PREFERRED EMBODIMENTS

To illustrate the present invention, the present method will now be described in more detail by way of example with respect to several preferred embodiments using sulphuric acid as eluting agent and lead oxide as neutralizing agent. For the rest of neutralizing agents, respectively eluting agents, or in case of mixture of neutralizing agents or eluting agents the sample treatment is similar as described below (quantities need however be adjusted). In particular, various kinds of exemplary sample pre-treatments (also called pre-extraction) will be described depending on the origin of the sample.

For both N and O isotope ratio measurements the sample, before nitrate extraction/collection, should preferably contain a minimum of 5 mg nitrate $NO_3^-$. A preferred amount of nitrate in the sample is however 10 mg, so that enough material may be available for multiple repetitions of measurements. The size of the sample, respectively the quantity of nitrates in the sample differs also with the possibilities-at the laboratory-to measure simultaneous or successive N and O isotope ratios. For simultaneous N and O isotope measurements the quantity of nitrate can be lower.

Before extraction, one will therefore preferably first measure the contents of nitrates in the original sample in order to have a correct image of quantity of sample necessary for processing; this can be done using known methods from analytical chemistry. The size of the sample for nitrate extraction may thus vary within a large interval. For example, determination of nitrate from ice needs sometimes about 70 or up to 100 kg of ice for melting, whereas 100 grams of ruccola plant may be sufficient.

It may be noted that the recovery of nitrate as lead nitrate (compound with a high molecular mass - 331.23), in accordance with the present method, is convenient for IRMS measurements, especially when the content of nitrate is low. Normally a quantity of 4 mg nitrate in the initial sample leads to, after freeze drying, a quantity of about 24 mg lead nitrate which is quite sufficient for nitrogen and oxygen isotope ratio measurements. Up to 2 mg of lead nitrate are usually required for each of the nitrogen and oxygen isotopes ratio measurements.

Upon correct sizing of the sample, it is preferable to pre-treat the sample to remove other undesired components-dissolved organic compounds (DOC) and other anions-from the sample, which can clog the resin or also interfere in nitrate retention on the column. This pre-treatment step depends on the origin of the sample.

**1. PRE-EXTRACTION TREATMENT OF SAMPLE**

**1.1 Pre-extraction of nitrate from aqueous sample**

Aqueous samples can be divided into two categories: freshwater and salt water. There is no fixed limit between these two categories and it is an option of experimentation to correctly classify the sample and consequently properly select the sample preparation. From the experimental point of view, it is interesting to find the N and O isotope ratios of nitrates in waters from lakes, rivers, rain, ice, etc. which fall in the freshwater category; sea and ocean waters falling in the salt water category. Different sample pre-extraction steps specific for these particulars cases are described below.

*1.1.1 Pre-extraction step for freshwater*

For ice water, rain water and even for uncontaminated river water a filtration step is normally considered sufficient as pre-treatment step.

A pre-treatment of the sample with lead oxide and sulphuric acid is however preferred for a better and quicker processing of the sample so as to remove some anions from the sample.

Accordingly, a quite small quantity of lead oxide (typically not more than 20 g) is added to the water sample (freshwater, ice water, rainwater), as well as optionally a small volume of sulphuric acid (e.g. 6 ml $H_2SO_4$ 3M), and some fine charcoal (2-3 spoons). Lead oxide (PbO) added in this step permits to clarify the sample and to remove excessive quantity of anions, which can interfere in the process of further nitrates column retention. Indeed, a high amount of anions other than $NO_3^-$ in the sample may lead to incomplete retention of nitrates due to competition between anions or saturation of exchange capacity of resin (see section 2 below).

So, lead oxide reacts with carbonate, sulphate, phosphate, etc. ions and corresponding precipitates are formed.

$$PbO + CO_3^{2-} \rightarrow PbCO_3 \downarrow + O^{2-}$$

$$PbO + PO_4^{3-} \rightarrow Pb_3(PO_4)_2 \downarrow + O^{2-}$$

$$PbO + SO_4^{2-} \rightarrow PbSO_4 \downarrow + O^{2-}$$

Lead oxide of course also reacts with nitrate ions and form soluble lead nitrate:

$$PbO + NO_3^- \rightarrow Pb(NO_3)_2 + O^{2-}$$

Adding optionally a small quantity of sulphuric acid advantageously permits reducing the viscosity of the sample and also promotes a good sedimentation. When sulphuric acid is added, the pH of the sample is preferably maintained above 3.5 in order to avoid losses of nitrate as nitric acid, due to the acid medium. Depending on the other particular compounds in water sample, it is possible to increase the quantity of lead oxide or to decrease the volume of sulphuric acid added. Of course, sulphuric acid that may be added reacts also with lead oxide and form insoluble lead sulphate. Charcoal, which is known to reduce the content in organic compound (DOC), may in case of clear water be added at about 10 minutes after adding sulphuric acid.

Optionally the sample can be heated up to a maximum of 70°C to accelerate the reactions. Before filtration, it is preferable to check the pH of sample with a pH paper. The pH of sample should preferably be greater than 3.5, more preferably between 4 and 6. The sample is then kept still (optionally at 1°C for several hours), until the solid parts deposit at the bottom of the recipient. The solid parts are then removed by filtration through e.g. 0,22 or 0,45 $\mu$m filters. The solid sediment is then washed 2-3 times with a small volume (20 ml) of deionised water (DIW) and this water is added to the sample.

### 1.1.2 PRE-EXTRACTION STEP FOR SALT WATER

The salt water needs a little bit complicate pre-extraction step and generally speaking are more possibility to extract nitrate from such samples.

#### 1.1.2.1 Water evaporation, reaction of principal contaminant anion with a precipitating agent in organic or aqueous-organic solvent

For sea water, for example, the high content of salts (especially NaCl) offers a limited number of possibilities to remove it from the sample. Trials of direct elimination of chloride as gas, or as aqueous precipitate are inefficient (solubility of $PbCl_2$ in water is 10 g/l) or expensive and dangerous in other cases (AgCl, $HgCl_2$).

However, one possibility to remove chloride proposed by the present invention is to make the reaction with lead oxide supported in a organic solvent or a mixture of organic solvent and water. Unexpensive organic solvent may be used for in this step, namely: alcohol (e.g. methylic alcohol, ethylic alcohol, propylic and isopropylic alcohol, buthylic and isobuthylic alcohol, etc), acetone, acetonitrile, dimethyl sulfoxide, dimethyl formamide, tetrahydrofuran, dioxane etc.

A preferred experimental protocol is the following. The water from the sample is firstly evaporated totally or partially through heating. Next, the mixture of solid lead oxide (in small particles) suspended in the organic solvent is poured over the residuum, whereby lead chloride precipitate are formed.

The obtained solution sample containing the nitrates and precipitates is filtered to remove the solid matter and alcohol is evaporated from the sample so as to convert it to an aqueous solution in view of the next step (section 2).

*1.1.2.2 Evaporation of water from initial sample, extraction of nitrate in solvent, optional purification*

This alternative pre-treatment step for salt water (seawater), starts with the evaporation of the entire or almost entire quantity of water, followed by nitrate extraction with an organic solvent or mixtures organic solvent-water. The evaporation can be fast (heater can be set up at 200 or 300°C) when the amount of water in sample is high, but as the water volume reduces the evaporation should be done at 90-100°C in order to avoid other secondary reactions. If possible, in the final stage when the volume of sample is small, low pressure evaporation can be carried out. Again, unexpensive organic compounds can be used as solvent, such as: methanol, ethanol, other superior alcohols, acetone, acetonitrile, dimethylformamide, dimethyl sulfoxide, tetrahydrofuran, dioxane, or mixtures of such organic solvent with water.

The extraction may be carried out with or without heating, mixing, under agitation, salts and solvent in a balloon under a condensation column for about one hour. After that, the mixture is cooled, if required, and filtered through e.g. a 0,22 $\mu$m filter.

The filtrate is evaporated at low pressure and the dry extract is weighed.

Preferably in order to recover more then 95 % of nitrates from sample the extraction is made 2 or 3 times with an appropriate volume of solvent, instead of making a single extraction with a higher volume of solvent. The extracted nitrates is then converted to aqueous solution trough evaporation of solvent from mixed aliquots and adding DIW over dried salts.

When the extraction is performed right way the dry extract is typically of maximum 200 mg. In case of a satisfactory extraction the dry extract is typically between 200 and 500 mg. When the dry extract is more than 500 mg the extraction step should preferably be repeated.

When dry extract is between 200 and 500 mg it is possible to continue the sample processing (section 2) with a greater quantity of exchange resin and consequently increasing the elution volume and lead oxide used, or to proceed to a new extraction.

When the sample dry extract is less then 200 mg, 100 ml of DIW water is added over dry extract, filtered through 0.22 $\mu$m filter and sample processing continue according to next step (section 2).

An improved, possibly supplementary, purification of dry salt consists in passing the sample over a cationic exchange material, followed by neutralisation with a small quantity of silver oxide in reaction with a small quantity of silver oxide.

*1.1.2.3 Remark*

It is to be noted that the above extraction-steps are only exemplary and that other procedures can be used to remove chlorides and other anions or cations from the sample. In particular, various combinations of the procedures described in sections 1.1.2.1 and 1.1.2.2 can be envisaged.

### 1.1.3 Pre-extraction step for water with high contents of DOC

Dissolved Organic Compounds (DOC) are problematic in nitrate sample extraction because these compounds tend to clog the resin used for nitrate extraction. Moreover, if these compound remains in the sample they tend to modify the isotope ration values for O and even N.

It shall be appreciated that the present invention proposes an advantageous, easier way of removing DOC by pre-treating the sample with lead oxide and sulphuric acid. For this step a quantity of about 20g of lead oxide may be added to sample, stirred for about 1 hour and after that a volume of about 12 ml $H_2SO_4$ 3 M may also be added maintaining the agitation for another half hour.

Upon addition of the sulphuric acid the pH of the mixture should preferably be greater than 3, preferably between 3.5 and 6. Indeed, sulphuric acid addition should be controlled to avoid a too acidic pH (below 3) because it may lead to a loss of a part of the nitrate. To avoid such situations, lead oxide is preferably added in excess to the sample.

Optionally the sample can be heated during the treatment. The sample may be kept at 1°C for about 6-12 hours before filtration through a 1 $\mu$m filter. After filtration about 3-4 spoons of active charcoal are added under agitation, and the sample is again filtrated through a 0,22 $\mu$m nylon filter.

The sample may then be processed according to the next step (section 2).

### 1.2 Pre-extraction of nitrates from solid samples

In addition to water analyses, it is of interest to understand nitrate sources and cycling mechanisms in solid samples such as soils, plants, alimentary products, biological tissues, etc. Because nitrates are easy soluble in water it is convenient to bring them in aqueous solution in order to extract from solid samples. There is a wide range of possibilities in order to pass the nitrates in solution, which depend on the initial solid sample.

As a general procedure, the solid sample is grounded and hot or cold DIW is added under agitation. Optionally the mixture can be boiled, frozen, subjected to microwave digestion, etc., in order to facilitate the diffusion of nitrate into the solvent. The mixture is then stored in a cool place at 1°C, for about 6-12 hours, depending on the size of the sample, in order to facilitate the sedimentation of solid particles.

Next, the sample is centrifuged or filtered through high or medium flow Watman filter paper, and the filtrate is treated like water with high contents of DOC (section 1.1.3).

In one embodiment, extraction of nitrates from soil can be made in KCl solution (like for other known methods regarding measurements of nitrates in soil) or directly in warm or cold DIW. If extraction of nitrate is made in KCl solution, after filtration of liquid sample, it is necessary to process the similarly to salt water pre-extraction step (section 1.1.2). In case of extraction of nitrate with hot or cold DIW, after filtration, the sample is then prepared like fresh water with high contents of DOC.

Nitrate extraction from plant tissues or from other food products is made in water after breaking the walls of cell tissues through freezing, heating, microwave digesting, etc. After the separation of the liquid part of the sample from solid sediments usually through filtration, the sample preparation is continued by a treatment like that for water sample with DOC (section 1.1.3), the difference being however that in this case the large quantity of interfering substances may need a quantity of about 20 till 30 g of lead oxide and about 10 ml $H_2SO_4$ for this step.

## 2. EXTRACTION OF NITRATES WITH AN ANION EXCHANGE RESIN

The liquid sample, pretreated according to one of the procedures described in section 1 or any other appropriate pre-treatment step, is passed over an anion exchange material (resin) in the form of a column in order to retain the nitrate ions thereon.

For retaining of nitrates from the sample solution it is possible to use a strong anion exchange resin (e.g. Biorad AG1X8) in chloride, sulphate or hydroxide form.

Nitrates are sorbed on the resin using known techniques and procedures from analytical chemistry. The flow rate through the column is advantageously controlled to optimize nitrate retention on the column. Generally, a flow rate of not more than 500 ml per hour is preferred in order to avoid nitrates fractionation through incomplete retention of nitrates. The presence of nitrates in the liquid volume upon column loading may be checked in a conventional way to verify the efficiency of the retention on the column.

Upon nitrate loading on to the columns, the latter may be packed and refrigerated for later time analysis, if desired.

## 3. ELUTION OF NITRATES FROM ANIONIC EXCHANGE MATERIAL

In this step, nitrate bound to the exchange resin is again passed in solution through elution (stripping) with sulphuric acid, phosphoric acid or a mixture of these acids, and the eluate is contacted with one of neutralizing agent described here below to precipitate undesired anions while forming soluble lead nitrate.

As a matter of fact, the selected neutralizing agents are insoluble or low soluble in water so that the excess of reagent can be removed by filtration.

The neutralising agent is selected from the group consisting of: lead oxide, calcium oxide, barium oxide, strontium oxide, corresponding hydroxides of these oxides, or mixtures of two or more of these compounds.

In addition, the neutralizing agent reacts with sulphate, phosphate (and other possible anions like sulphite or carbonate) ions to form insoluble compounds that can be easily removed by filtration. Hence, upon removal of other precipitates, the solution contains lead nitrate-respectiveiy calcium, barium or strontium nitrate-and water. This solution may then be freeze dried to remove the water and obtain solid nitrate compounds (i.e. $Pb(NO_3)_2$, $Ca(NO_3)_2$, $Ba(NO_3)_2$ or $Sr(NO_3)_2$) in view of isotope ratio measurements.

Lead form more type of oxide like: PbO, $PbO_2$, $Pb_2O_3$, $Pb_3O_4$. Also for the same compound like PbO exist more allotropic form like: red (II) lead oxide and yellow (II) lead oxide. In principle, all form of lead oxide can be used as neutralizing agent. Yellow (II) lead oxide (PbO) is preferred for its high reaction kinetics with nitrates and comparatively lower reaction kinetics with sulphate, which, due to the predominance of sulphate, permits dissipation of heat produced by the reaction and does therefore not require external cooling.

The eluting agent preferably consists of pure sulphuric acid or phosphoric acid, or a mixture of such pure acids. The concentration may be in the range of 1 to 8 M, preferably 3 to 5 M.

As applied to the exemplary elution/neutralisation with $H_2SO_4$ and PbO, for this process a quite optimal elution may be obtained with 15 ml of 3M $H_2SO_4$ solution, added on the column in 3 ml increments. Preferably, the nitrate-containing eluate falls, drop by drop, in a recipient with 15 g lead oxide and approximate 50 ml DIW. It is possible to use also other concentrations of sulphuric acid with correspondent volume and increment changes.

Yellow lead oxide (PbO) is preferably used for neutralization of nitrate, sulphate and possibly other anions according to the reactions:

$$PbO_{(s)} + H_2CO_3 \rightarrow PbCO_{3(s)} + H_2O$$

$$3PbO(s) + 2H_3PO_4 \rightarrow Pb_3(PO_4)_{2(s)} + 3H_2O$$

$$PbO_{(s)} + H_2SO_4 \rightarrow PbSO_{4(s)} + H_2O$$

$$H_2SO_4 + HNO_3 + PbO_{(s)} \rightarrow PbSO_{4(s)} + Pb(NO_3)_2 + H_2O$$

While precipitates are formed, lead nitrate $Pb(NO_3)_2$ formed by reaction of nitric acid with lead oxide is soluble and can therefore be easy separated by filtration from the other lead compounds.

An important benefit of using yellow lead oxide (PbO) is a high speed of reaction with nitrate and a lower speed with sulphate. Consequently, because sulphate is the predominant anion, there is time for heating produced by reaction to dissipate, and an additional external cooling device is not required.

Other benefits of using lead oxide as neutralizing agent are:

- lead oxide is insoluble in water, so that excess of reagent can be remove by filtration;

- lead sulphate and other common lead compounds (lead sulfite, lead carbonate, lead phosphate) are insoluble and can be removed by filtration before freeze drying the sample.

The reaction is considered complete when a final pH greater then 3.5 (normally between 4 and 6) is attained. The pH may be verified with a common pH paper.

The lead precipitates are then removed by filtration through DIW-rinsed, nylon 0,22 mm filters and collected in 100-ml beakers. Additional DIW water is used to rinse the lead precipitated on the filter, bringing the sample volumes to about 50 ml.

The sample containing lead nitrates is freeze dried in order to evaporate water and remaining solid lead nitrate is used for the next steps of isotope ratio measurements (sections 4 and 5).

## 4. NITROGEN ISOTOPE RATIO MEASUREMENTS

For N isotope ratio measurements an Elemental Analyzer coupled with an Isotope Ratio Mass Spectrometer is used (EA CF IRMS). Such experimental set up is known in the art and will not be explained in detail herein.

Tin capsule may be conveniently used for the analysis. Solid lead nitrate is weighed and converted in $N_2$ gas in the Elemental Analyzer and then ratio between 29 and 28 isotopic peaks is quantified. The addition of other compounds in capsules, such as sucrose, in order to have a good combustion is not required.

## 5. OXYGEN ISOTOPE RATIO MEASUREMENTS

For Oxygen isotopes measurements in order to remove trace of O compound contaminants, a supplementary step is necessary. In this purpose depending on the laboratory possibility and DOC present in sample we can use solid phase extraction, activated charcoal, XAD type resin or ultra filtration, osmotic membrane filtration etc. Sometimes, using a cationic exchange resin in front of anionic exchange resin reduce drastically traces of other oxygen containing impurities. Again, such procedure is known in the art and will not be further explained.

Experimentally, after N isotopes measurements over the sample about 15 ml DIW is added and the sample is processed through one of upper enumerated techniques, and after that is again filtered through 0,22 mm nylon filter and freeze dried. The Oxygen isotope ratio measurements are then made on a TC-CF-IRMS device.

## EXAMPLE 1- Extraction Of Nitrates From Precipitation

A quantity of 30 L rain water with contents of nitrates of 1 mg/L was divided in 3 sub-samples of 10 liters in order to make easier the sample preparation. To each sub-sample, under agitation, a quantity of 10 g lead oxide was added, and after half-hour also a volume of 2 ml $H_2SO_4$ 3M was added. Maintaining the agitation, about 2 spoons of activated charcoal were added to each sub-sample. The sub-samples were advantageously kept in a fridge at 1°C for 12 hour for sedimentation and after that filtrated through 0,22 μm nylon filter.

Next, the filtrate was passed through an anion exchange column AG1 X8 (Bio-Rad company), 200-400 mesh, in order to bind the nitrates on resin. The elution was then made with 5 x 3ml $H_2SO_4$ 3M.

During elution, the nitrate bearing eluant falls, drop by drop, in a glass containing 13 g lead oxide and 50 ml DIW, under agitation.

After complete reaction, checked with pH paper, the formed precipitate was filtered through 0,22 μm nylon filter and the liquid part was freeze dried in order to obtain solid lead nitrate used for N isotopes ratio measurements. For oxygen isotopes ratio measurement, over the solid lead nitrate about 20 ml DIW and 1-2 spoons of active charcoal were added. The mixture was again filtrated through 0,22 μm nylon filter, freeze dried and weighed for O ratio isotopes measurements.

## EXAMPLE 2 Extraction Of Nitrates From Fresh Water

A volume of 5 L water from adduction pipe, with content in nitrate of 5 mg /L previously measured and contents in DOC of 10 mg /L was processed for nitrate extraction in the following way: to the entire volume a quantity of 15 g of PbO was added, under agitation, for about 1 hour. In order to speed precipitations water was warmed up to 60°C, and after 1 hour a volume of 5 mL of sulphuric acid 3M was added. After another half hour of agitation, 2 spoons of active charcoal were added, maintaining agitation for another half hour, and then the sample was let to clarify. Normally the solid sediments remain in the lower part of vessel. Then filtration was carefully started through 0,22 μm filter by adding first clear water from the upper part and at the end also the solids deposit. In this way a single nylon filter can be used for entirely quantity of water without blocking and with a good time a filtration (less then 15 minutes). The solid sediment was washed 3 times with 20 ml DIW and this water was added to the sample.

The filtrate was then eluted through 3,5 g anion exchange resin. We used AG1 X8 resin from Bio-Rad, 200 -400 mesh, in sulphate form.

The elution was made with 5 x 3ml $H_2SO_4$3M.

During elution. the nitrate bearing eluant falls, drop by drop, in a glass containing 13 g lead oxide and 50 ml DIW, under agitation.

After complete reaction, checked with pH paper, the formed precipitate was filtered through 0,22 μm nylon filter and the liquid part is freeze dried in order to obtain solid lead nitrate used for N isotopes ratio measurements. For oxygen isotopes ratio measurement, over the solid lead nitrate about 20 ml DIW and 2 spoons of active charcoal were added. The mixture was again filtrated throughthrough 0,22 μm nylon filter, freeze dried and weighed for O ratio isotopes measurements

## EXAMPLE 3 Extraction Of Nitrates From Sea Water

A volume of 5 L sea water, with contents of 3 mg/L nitrate (previously measured) was let to evaporate in the first step using a heated plate at 200 °C. When the sample volume was about 400 mL, the salt deposit was filtrated and removed. The process was repeated once again when the volume of sample was about 200 mL. The aliquot was then evaporated at 70 °C until obtaining dry salts. A volume of 100 mL acetone:water in proportion 100:10 was added over the salts and the balloon was heated under condensation column at 50°C column for a half hour. For the entire period of heating the sample was agitated vigorously. The mixture was filtrated through 0,22 μm nylon filter. The process of extraction was again performed with the same volume of solution and following the same procedure upward described.

The aliquots obtained from both extraction were mixed and the organic solvent was evaporated. Over the dry salts about 30 mL of DIW water and 2 g of $Ag_2O$ was added and mixed for a half hour. After the reaction was finished, the sample was again filtrated and the solution was passed through 3,5 g AG1 X8 anionic exchange resin from Bio-Rad previously activated. The elution of nitrate from the resin was made adding for five times a volume of 3 ml $H_2SO_4$ 3M.

The nitrate bearing eluant was collected, drop by drop, in a glass containing 13 g lead oxide and 50 mL DIW, under agitation.

After complete reaction, checked with pH paper, the formed precipitate was filtered through 0,22 μm nylon filter and the liquid part was freeze dried in order to obtain solid lead nitrate used for N and O isotopes ratio measurements.

## EXAMPLE 4 Extraction Of Nitrates From Soil

Over a 5 kg soil quantity with 5 mg nitrate/kg, 3 L DIW water was added and the mixture was heated at 70 °C for one hour. After sedimentation, the mixture was filtrated through normal Watman filter paper, and the soil was again washed with 2 L of DIW in order to have a good extraction of nitrates. Both water filtrates were mixed and a quantity of 35 g lead oxide was added. After one hour agitation also 10 mL $H_2SO_4$ 3 M was added. The precaution was the same, pH of sample was kept above 3,5 for all time of sample preparation. The sample was filtrated and 3 spoons of activated charcoal were added under agitation and after half hour the sample was passed again through 0,22 μm nylon filter. A

quantity of 4 g AG1 X8 anionic exchange resin was weighed and activated, followed by adding of sample on it. The elution of nitrate from the resin was made by adding for five times a volume of 3 mL $H_2SO_4$ 3M.

The nitrate bearing eluant was collected, drop by drop, in a glass containing 13 g lead oxide and 50 ml DIW, under agitation.

After complete reaction, checked with pH paper, the formed precipitate was filtered through 0,22 $\mu$m nylon filter and the liquid part was freeze dried in order to obtain solid lead nitrate used for N and O isotopes ratio measurements.

## EXAMPLE 5 Extraction Of Nitrates From Plant

200 g of salad was ground and 300 mL DIW were added. The mixture was filtrated through Watman normal paper and the salad was again washed with 200 mL DIW. In the solution resulted from both filtration 20 g of PbO were added. After half hour agitation and heating at 70°C, also 5 mL $H_2SO_4$ 3 M were added. The sample was filtrated through 0,22 $\mu$m nylon filter, and in filtrate 2 spoons of activated charcoal were added, followed by a secondary filtration through 0,22 $\mu$m nylon filter. A quantity of 4 g AG1 X8 anionic exchange resin was weighed and activated, followed by adding of sample on it. The elution of nitrate from the resin was made adding for five times a volume of 3 mL $H_2SO_4$ 3M.

The nitrate bearing eluant was collected, drop by drop, in a glass containing 13 g lead oxide and 50 ml DIW, under agitation.

After complete reaction, checked with pH paper, the formed precipitate was filtered through 0,22 $\mu$m nylon filter and the liquid part was freeze dried in order to obtain solid lead nitrate used for N and O isotopes ratio measurements.

## EXAMPLE 6 Extraction Of Nitrates From Tomato Juice

Over 500 mL tomato juice a volume of 300 mL DIW was added and the mixture was boiled for a half hour. The sample was filtrated through Watman normal paper, and the solid deposit was washed with 50 mL DIW. The liquid part of sample containing interesting nitrates was processed like in example 5.

## EXAMPLE 7 Extraction Of Nitrates From Urine

Normal urine contains 0.1-0.4 % nitrate, the excess over intake from food probably arising as end-product of metabolism (Sollmann, 1957).

In a volume of 150 mL urine, 20 g lead oxide were added, under agitation. After half hour, also 3 mL $H_2SO_4$ 3 M were added. The sample was filtrated through 0,45 $\mu$m nylon filter, and in filtrate 2 spoons of activated charcoal were added, followed by a secondary filtration through 0,22 $\mu$m nylon filter. A quantity of 4 g AG1 X8 anionic exchange resin was weighed and activated, followed by adding of sample on it. The elution of nitrate from the resin was made adding for five times a volume of 3 mL $H_2SO_4$ 3M.

The nitrate bearing eluant was collected, drop by drop, in a glass containing 13 g lead oxide and 50 ml DIW, under agitation.

After complete reaction, checked with pH paper, the formed precipitate was filtered through 0,22 $\mu$m nylon filter and the liquid part was freeze dried in order to obtain solid lead nitrate used for N and O isotopes ratio measurements.

## LIST OF REFERENCES

[1] MacKown, C.T., Brooks, P.D., and Smith, M.S., 1987. Diffusion of Nitrogen-15 Kjeldahl digests for isotopic analysis. Soil Sci. Soc. Am. J., 51: 87-90.

[2] Sigman, D.M., Altabet, M.A., Michener, R., McCorkle, D.D., Fry, B., and Holmes, R.M., 1997. Natural abundance-level measurement of the nitrogen isotopic composition of oceanic nitrate: an adaptation of the ammonium diffusion method. Mar. Chem., 57: 227-242.

[3] Sebilo M., Mayer B., Grably Micheline, Billiou D., Mariotti A., 2004. The use of the "Ammonium Diffusion" Method for δ15N-NH4 and δ15N-NO3 measurements: Comparison with other techniques. Environ. Chem. 99-103.

[4] Casciotti K.L., Sigman D. M., Hastings M.G., Bohlke J. K., Hilkert A., 2002. Measuremeant of the oxygen isotopic composition of nitrate in seawater and freshwater using the denitrifier method. Anal. Chem., vol 74., no 19, 4905-4912.

[5] Mcllvin M. R., Altabet M., 2005 Chemical Conversion of nitrate and nitrite to nitrous oxide for nitrogen and oxygen isotopic analysis in freshwater and seawater, web published and also accepted for publishing in Anal. Chem.

[6] Silva, S.R., Kendall, C., Wilkison, D.H., Chang, C.C.Y., Ziegler, A.C., and Avanzino, R.. 2000. A new method for collection of nitrate from fresh water and the analysis of nitrogen and oxygen isotope ratio. J. of Hydrology, 228, 22-36.

[7] Chang C.C.Y., Langston J., Riggs M., Campbell D.H., Silva S.R., Kendall C., 1999. A method for nitrates collection for δ15N and δ18O analysis from waters with low nitrate concentration. Can. J. Fish. Aquatic Sci. 56, 1856-1864.

[8] Sakata M., 2001. A simple and rapid method for δ15 N determination of ammonium and nitrates in water samples. Geochem. Journ., 35, 271-275

**Claims**

1. Method for the determination of nitrogen and/or oxygen isotope ratio, comprising the steps of:

   a) passing a nitrate-containing liquid sample, preferably after a pre-treatment step, over an anion exchange material to retain nitrates thereon;
   b) eluting nitrates from said anion exchange material with an eluting agent comprising sulphuric acid, phosphoric acid or a mixture of them;
   c) neutralizing the nitrate-containing eluate with a neutralizing agent selected from the group consisting of: lead oxide, calcium oxide, barium oxide, strontium oxide, the corresponding hydroxides, or mixtures of two or more of these compounds;
   d) measuring the nitrogen and/or oxygen isotope ratio in the nitrate-containing eluate.

2. Method according to claim 1, wherein upon completion of step (c), said eluate is filtered to remove precipitates.

3. Method according to claim 2, wherein step (c) is considered completed when a pH between 3.5 and 6 is attained.

4. Method according to any one of the preceding claims, wherein said eluting agent consists of pure acid, respectively a mixture of pure acids.

5. Method according to any one of the preceding claims, comprising the additional step of freeze drying the filtered eluate.

6. Method according to any one of the preceding claims, wherein said neutralizing agent is lead oxide, preferably in the form of yellow lead oxide (PbO).

7. Method according to any one of the preceding claims, wherein said pre-treatment step comprises adding lead oxide and optionally sulphuric acid to said sample, and removing the resulting precipitates by filtering.

8. Method according to any one of claims 1 to 6, wherein said pre-treatment step comprises :

   • evaporating water from said sample;
   • collecting the nitrates with an organic solvent optionally mixed with water or removing other contaminants anions by a reaction in organic solvent eventually mixed with water;
   • filtering the obtained liquid sample to remove solid particles.

9. Method according to any one of the preceding claims, comprising a preliminary step, before step a), of preparing said nitrate containing liquid sample from a nitrate containing solid sample.

**Patentansprüche**

1. Verfahren zur Bestimmung des Stickstoff- und/oder Sauerstoff-Isotopenverhältnisses, wobei das Verfahren die folgenden Schritte umfasst:

   a) Leiten einer nitrathaltigen flüssigen Probe, vorzugsweise nach einem Vorbehandlungsschritt, über ein Anionenaustauschmaterial, um Nitrate darauf zurückzuhalten;

b) Eluieren von Nitraten aus dem Anionenaustauschmaterial mit einem Eluent, der Schwefelsäure, Phosphorsäure oder ein Gemisch dieser umfasst;

c) Neutralisieren des nitrathaltigen Eluats mit einem Neutralisationsmittel, das aus der Gruppe bestehend aus: Bleioxid, Calciumoxid, Bariumoxid, Strontiumoxid, den entsprechenden Hydroxiden oder Gemischen von zwei oder mehr dieser Verbindungen ausgewählt ist;

d) Messen des Stickstoff- und/oder Sauerstoff-Isotopenverhältnisses in dem nitrathaltigen Eluat

2. Verfahren nach Anspruch 1, wobei das Eluat nach Abschluss von Schritt c) zum Entfernen von Niederschlägen filtriert wird.

3. Verfahren nach Anspruch 2, wobei Schritt c) als abgeschlossen betrachtet wird, wenn ein pH-Wert zwischen 3,5 und 6 erreicht wird

4. Verfahren nach einem der vorhergehenden Ansprüche, wobei der Eluent aus reiner Säure bzw einem Gemisch von reinen Säuren besteht

5. Verfahren nach einem der vorhergehenden Ansprüche, das den zusätzlichen Schritt des Gefriertrocknens des filtrierten Eluats umfasst

6. Verfahren nach einem der vorhergehenden Ansprüche, wobei das Neutralisationsmittel Bleioxid, vorzugsweise in der Form von gelben Blei(II)-oxid (PbO) ist

7. Verfahren nach einem der vorhergehenden Ansprüche, wobei der Vorbehandlungsschritt das Zugeben von Bleioxid und gegebenenfalls Schwefelsäure zu der Probe und das Entfernen der resultierenden Niederschläge durch Filtrieren umfasst.

8. Verfahren nach einem der Ansprüche 1 bis 6, wobei der Vorbehandlungsschritt Folgendes umfasst:

• Verdunsten von Wasser aus der Probe;
• Sammeln der Nitrate mit einem organischen Lösungsmittel, das gegebenenfalls mit Wasser gemischt ist, oder Entfernen anderer verunreinigender Anionen durch eine Reaktion in organischem Lösungsmittel, das gegebenenfalls mit Wasser gemischt ist;
• Filtern der erhaltenen flüssigen Probe zum Entfernen fester Teilchen

9. Verfahren nach einem der vorhergehenden Ansprüche, das vor Schritt a) einen vorbereitenden Schritt des Herstellens der nitrathaltigen flüssigen Probe aus einer nitrathaltigen festen Probe umfasst.

## Revendications

1. Procédé pour la détermination du rapport isotopique de l'azote et/ou de l'oxygène, comprenant les étapes dans lesquelles

a) on fait passer un échantillon liquide contenant des nitrates, de préférence après une étape de prétraitement, par-dessus une matière d'échange d'anions afin d'y retenir les nitrates ;

b) on élue les nitrates à partir de ladite matière d'échange d'anions avec un agent d'élution comprenant de l'acide sulfurique, de l'acide phosphorique ou un de leurs mélanges ;

c) on neutralise l'éluat contenant des nitrates avec un agent de neutralisation choisi parmi le groupe constitué par : l'oxyde de plomb, l'oxyde de calcium, l'oxyde de baryum, l'oxyde de strontium, les hydroxydes correspondants, ou encore des mélanges de deux de ces composés ou plus ;

d) on mesure le rapport isotopique de l'hydrogène et/ou de l'oxygène dans l'éluat contenant des nitrates

2. Procédé selon la revendication 1, dans lequel, au terme de l'étape (c), on filtre ledit éluat pour éliminer les précipités

3. Procédé selon la revendication 2, dans lequel on considère que l'étape (c) est arrivée à son terme lorsqu'on obtient un pH entre 3,5 et 6.

4. Procédé selon l'une quelconque des revendications précédentes, dans lequel ledit agent d'élution est constitué d'acide pur, respectivement d'un mélange d'acides purs

**5.** Procédé selon l'une quelconque des revendications précédentes, comprenant l'étape supplémentaire de lyophilisation de l'éluat filtré

**6.** Procédé selon l'une quelconque des revendications précédentes, dans lequel ledit agent de neutralisation est l'oxyde de plomb, de préférence sous la forme d'oxyde de plomb jaune (PbO)

**7.** Procédé selon l'une quelconque des revendications précédentes, dans lequel ladite étape de prétraitement comprend l'addition d'oxyde de plomb et le cas échéant d'acide sulfurique audit échantillon, et l'élimination des précipités résultants par filtration

**8.** Procédé selon l'une quelconque des revendications 1 à 6, dans lequel ladite étape de prétraitement comprend :

• l'évaporation de l'eau à partir dudit échantillon ;
• la récolte des nitrates avec un solvant organique facultativement mélangé avec de l'eau ou bien l'élimination d'autres anions contaminants via une réaction dans un solvant organique le cas échéant mélangé avec de l'eau ;
• la filtration de l'échantillon liquide obtenu afin d'éliminer les particules solides.

**9.** Procédé selon l'une quelconque des revendications précédentes, comprenant une étape préliminaire, avant l'étape a), pour la préparation dudit échantillon liquide contenant des nitrates à partir d'un échantillon solide contenant des nitrates.

# EP 1 939 142 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5062957 A
- DD 295612 A5
- DD 250472 A1

### Non-patent literature cited in the description

- **Silva S.R. et al.** A new method for collection of nitrate from fresh water and the analysis of nitrogen and oxygen isotope ratios. *Journal of Hydrology,* 2000, vol. 228, 22-36
- **MACKOWN, C.T ; BROOKS, P.D ; SMITH, M.S.** Diffusion of Nitrogen-15 Kjeldahl digests for isotopic analysis. *Soil Sci. Soc. Am. J.,* 1987, vol. 51, 87-90
- **SIGMAN, D.M ; ALTABET, M.A ; MICHENER, R ; MCCORKLE, D.D ; FRY, B ; HOLMES, R.M.** Natural abundance-level measurement of the nitrogen isotopic composition of oceanic nitrate: an adaptation of the ammonium diffusion method. *Mar. Chem.,* 1997, vol. 57, 227-242
- **SEBILO M ; MAYER B ; GRABLY MICHELINE ; BILLIOU D ; MARIOTTI A.** Ammonium Diffusion'' Method for $\delta$15N-NH4 and $\delta$15N-NO3 measurements: Comparison with other techniques. *Environ. Chem.,* 2004, 99-103
- **CASCIOTTI K.L ; SIGMAN D. M ; HASTINGS M.G ; BOHLKE J. K ; HILKERT A.** Measuremeant of the oxygen isotopic composition of nitrate in seawater and freshwater using the denitrifier method. *Anal. Chem.,* 2002, vol. 74 (19), 4905-4912
- **MCLLVIN M. R ; ALTABET M.** Chemical Conversion of nitrate and nitrite to nitrous oxide for nitrogen and oxygen isotopic analysis in freshwater and seawater. *Anal. Chem.,* 2005
- **SILVA, S.R ; KENDALL, C ; WILKISON, D.H ; CHANG, C.C.Y ; ZIEGLER, A.C ; AVANZINO, R.** A new method for collection of nitrate from fresh water and the analysis of nitrogen and oxygen isotope ratio. *J. of Hydrology,* 2000, vol. 228, 22-36
- **CHANG C.C.Y ; LANGSTON J ; RIGGS M ; CAMPBELL D.H ; SILVA S.R ; KENDALL C.** A method for nitrates collection for $\delta$15N and $\delta$18O analysis from waters with low nitrate concentration. *Can. J. Fish. Aquatic Sci.,* 1999, vol. 56, 1856-1864
- **SAKATA M.** A simple and rapid method for $\delta$15 N determination of ammonium and nitrates in water samples. *Geochem. Journ.,* 2001, vol. 35, 271-275